# EUROPÄISCHE PATENTANMELDUNG

(11) **EP 4 410 233 A2**
(43) Veröffentlichungstag der Anmeldung: **07.08.2024**
(21) Anmeldenummer: 24151085.8
(22) Anmeldetag: 10.01.2024
(51) Int. Cl.: A61C 8/00, C04B 35/488, C04B 35/645, C04B 35/486

(54) **TEMPORÄRES ZAHNIMPLANTAT SOWIE EIN VERFAHREN ZUR HERSTELLUNG EINES TEMPORÄREN ZAHNIMPLANTATS**

(30) Priorität: 12.01.2023 DE 102023000090
(71) Anmelder: Heil, Martin, 63688 Gedern (DE)
(72) Erfinder: Moje, Hans-Jürgen, 07616 Petersberg (DE); Heil, Martin, 63688 Gedern (DE); Wolf, Artur, 53639 Königswinter (DE)
(74) Vertreter: Hehn, Christian Michael

(57) **Zusammenfassung**

Die vorliegende Erfindung betrifft ein temporäres Zahnimplantat, das eine Materialkombination aus Zirkonoxid (ZrO₂) und Aluminiumoxid (Al₂O₃) oder eine Materialkombination aus einem Zirkonoxid (ZrO₂) und einem Dierbiumtrioxid (Er₂O₃) umfasst. Die Materialkombination kann heißisostatisch nachverdichtet sein. Ferner umfasst die vorliegende Erfindung ein Verfahren zur Herstellung eines temporären Zahnimplantats, vorzugsweise einer Mikro-Osteosyntheseschraube.

## Beschreibung

### 1. Technisches Gebiet

Die vorliegende Erfindung betrifft ein Zahnimplantat, vorzugsweise ein temporäres Zahnimplantat, welches universell einsetzbar ist. Das Zahnimplantat umfasst eine Zirkoniumdioxid-Keramik, insbesondere eine Materialkombination aus einem Zirkonoxid (ZrO₂) und einem Aluminiumoxid (Al₂O₃) oder eine Materialkombination aus einem Zirkonoxid (ZrO₂) und einem Dierbiumtrioxid (Er₂O₃) für den medizinischen Einsatz. Ferner betrifft die vorliegende Erfindung ein Verfahren zur Herstellung eines temporären Zahnimplantats.

### 2. Stand der Technik

Zahnimplantate/Implantate werden in der zahnärztlichen Therapie verwendet, um einen oder mehrere erkrankte oder fehlende Zähne vollständig zu ersetzen.

Temporäre Implantate werden in der Medizin eingesetzt, um eine stabile Fixation zu ermöglichen.

Häufig werden temporäre Zahnimplantate aus Titan gewählt. Ein Belassen der temporären Implantate als Implantat im Patienten ist möglich.

Zur Anwendung in der präimplantologischen augmentativen Chirurgie sind Mikroschrauben zur Fixation sehr kleiner Knochenfragmente bekannt.

Dabei weisen Mikroschrauben aus Chrom-Kobalt-Molybdän-Legierungen als Implantat in der Regel neben einer guten Gewebeintegration und Entfernbarkeit zudem eine gute Rigidität in der Fixation der Fragmente auf.

Temporäre Zahnimplantate sind in der maxillofacialen Traumatologie im Einsatz. Hierbei war ihre Hauptaufgabe, eine Kontakt- oder Distanzosteogenese mit hinreichender Rigidität im Bereich der Knochen des Gesichtsschädels herzustellen. Da die Stabilisierung der Fragmente im Vordergrund stand, wurde auf eine ausreichende Dimensionierung des Materials geachtet, was aber die Reposition von Frakturen des Gesichtsschädels mit geringer Fragmentgröße erschwerte. Aus diesem Grund wurden temporäre Zahnimplantate entwickelt, die auch die Fixierung kleinerer Fragmente möglich machten.

Die präimplantologische augmentative Chirurgie stellte höhere Anforderungen an die Feinheit der Materialien. Dies führte zu der Entwicklung von temporären Zahnimplantaten, die die Fixation sehr kleiner Knochenfragmente ermöglichen. Sehr kleine Osteosyntheseschrauben aus Titan zeigen aber aufgrund einer partiellen Osseointegration oft das Problem einer erschwerten Entfernbarkeit. Schrauben aus Chrom-Kobalt-Molybdän-Legierungen weisen neben guter Gewebeintegration und Entfernbarkeit zudem eine gute Rigidität in der Fixation der Fragmente auf. Im Handel werden Mikroschrauben mit einem Durchmesser von 1,0 mm bis 1,2 mm vertrieben, die aus rostfreiem, medizinischem Stahl hergestellt wurden, die die Vorteile eines geringen Durchmessers mit guter Gewebeintegration und Entfernbarkeit verbinden.

Praktische Einsatzfälle von temporären Zahnimplantaten bzw. Knochenimplantaten, auch allgemein als Implantate bezeichnet, lassen teilweise eine Unverträglichkeit bei der Gewebeintegration der Materialien von Stahl, Stahllegierungen, Titan, Titanlegierungen oder Chrom-Kobalt-Molybdän-Legierungen mit dem Ziel-Organismus erkennen, in welchem ein temporäres Zahnimplantat eingesetzt werden soll.

Ein Zahnimplantat, insbesondere ein temporäres Zahnimplantat oder ein Knochenimplantat aus Metall, Metalllegierungen oder Hybridmaterialien ist potential reaktiv bei Kontakt mit biologischem Gewebe und mit Körperflüssigkeiten und es können Unverträglichkeiten, Allergien und abstoßende Reaktionen hervorrufen werden.

### 3. Aufgabenstellung

Es ist deshalb Aufgabe der vorliegenden Erfindung ein temporäres Zahnimplantat und ein Verfahren zur Herstellung eines temporären Zahnimplantats für Organismen mit Unverträglichkeit bei der Gewebeintegration gegenüber Metallen, Metalllegierungen, Hybridmaterialien, wie beispielsweise Titan, Titanlegierungen oder Chrom-Kobalt-Molybdän-Legierungen bereitzustellen, welche eine hohe mechanische Festigkeit aufweisen, die bei der Gewebeintegration verträglich sind die in eine für die Gewebeintegration im Ziel-Organismus verträgliche integrierbare alternative Materialzusammensetzung umfassen. Ferner sollen die Nachteile des Standesder-Technik überwunden werden können.

### 4. Zusammenfassung der Erfindung

Die Aufgabe wird durch ein erfindungsgemäßes temporäres Zahnimplantat gemäß den Merkmalen des unabhängigen Patentanspruchs 1 gelöst.

Ferner wird die Aufgabe durch ein erfindungsgemäßes Verfahren zur Herstellung eines temporären Zahnimplantats bzw. eines Knochenimplantats gemäß den Merkmalen des unabhängigen Patentanspruchs 17 gelöst.

Weitere vorteilhafte Ausgestaltungen der Lösung finden sich in den abhängigen Patentansprüchen.

Ein erfindungsgemäßes temporäres Zahnimplantat umfasst eine Materialkombination aus Zirkoniumdioxid-Keramik.

Vorteilhafterweise umfasst das temporäre Zahnimplantat eine Materialkombination aus einem Zirkonoxid (ZrO₂) und einem Aluminiumoxid (Al₂O₃) oder eine Materialkombination aus einem Zirkonoxid (ZrO₂) und einem Dierbiumtrioxid (Er₂O₃).

Die Verwendung von temporären Zahnimplantaten, die diese Materialkombinationen umfasst, stellt eine neue Entwicklung in der Befestigung und Reposition in rekonstruktiver Augmentation von Knochendefekten dar. Eine Materialkombination aus Zirkoniumdioxid-Keramik, vorzugsweise eine Materialkombination aus einem Zirkonoxid (ZrO₂) und einem Aluminiumoxid (Al₂O₃) oder eine Materialkombination aus einem Zirkonoxid (ZrO₂) und einem Dierbiumtrioxid (Er₂O₃), bietet den Vorteil, dass dieses temporäre Zahnimplantat bei einem Patienten keine Unverträglichkeiten hervorruft. Diese Materialkombinationen sind biologisch 100% neutral, weisen eine hohe Stabilität und Festigkeit auf und sind sehr verträglich.

Die verwendeten Materialien Zirkonoxid (ZrO₂), Aluminiumoxid (Al₂O₃) und Dierbiumtrioxid (Er₂O₃) sowie deren Materialkombinationen weisen die vorteilhaften Materialeigenschaften auf, dass sie neutral, biokompatibel, d. h. gut gewebeverträglich im Kontakt mit Knochen und Weichgewebe, mineralisch, nicht metallisch, nicht magnetisch, nicht stromleitend und nicht radioaktiv sind. Diese Materialien und Materialkombinationen reagieren nicht mit Körperflüssigkeiten. Selbst wenn diese Materialien und Materialkombinationen starken Säuren ausgesetzt werden, werden diese Materialien nicht angegriffen. Sie sind stabil, korrosionsbeständig und langlebig.

Das erfindungsgemäße temporäre Zahnimplantat kann insbesondere in folgenden Anwendungsbereichen eingesetzt werden.
> Osteosynthese
> Zum Positionieren/Befestigen von Hilfsmitteln für die gesteuerte Knochenregeneration
> Abstützung für provisorische Prothesen, okklusale Abstützung
> Augmentat Fixierung / Halter
> Titankäfige Fixierungen

In einer bevorzugten Ausführungsform ist das Zirkonoxid (ZrO₂) mit Yttriumoxid (Y₂O₃) als Stabilisator dotiert. Vorteilhafterweise liegt die Konzentration von Yttriumoxid (Y₂O₃) zwischen 2 Gew% und 8 Gew%, insbesondere zwischen 3 Gew% und 6 Gew.%.

Das Zahnimplantat kann als temporäres Zahnimplantat ausgebildet sein. In diesem Fall verbleibt das Zahnimplantat maximal ein Jahr im Kiefer des Patienten. Beispielsweise kann sich ein Implantat zwischen drei und sechs Monaten im Kiefer eines Patienten befinden. Bei einer Prothesen-Fixation kann das Zahnimplantat länger als sechs Monate im Kiefer des Patienten verbleiben.

In einem bevorzugten Ausführungsbeispiel umfasst das Zahnimplantat eine Mikro-Osteosyntheseschraube.

Ein temporäres Zahnimplantat kann auch ein Knochenimplantat, eine Knochen-blök-Granulat-Augmentat-Schraube oder dergleichen sein. Das Befestigen, Einbringen, Rekonstruieren erfolgt mittels der Augmentation. In der Zahnmedizin versteht man unter Augmentation den Wiederaufbau von abgebautem Kieferknochen durch Eigenknochen oder Fremdmaterial, insbesondere um ausreichend Knochenangebot zu schaffen, damit eine Zahnprothese auf dem Kieferkamm stabilisiert werden kann oder ein Zahnimplantat eingesetzt werden kann. Verfahren der Augmentation werden auch in der Parodontologie angewandt, um durch Parodontitis abgebauten Alveolarknochen wieder aufzubauen.

Ein Belassen des temporären Zahnimplantates bzw. der temporären Zahnimplantate als Implantat bzw. Implantate im Patienten ist möglich.

Zum Einsetzen des temporären Zahnimplantats, muss im Knochen vorgebohrt werden. Ein Bohrer umfasst vorteilhafterweise mindestens den Kerndurchmesser des Zahnimplantats, insbesondere + 0,2 mm des Kerndurchmessers des temporären Zahnimplantats, abhängig von der Knochenqualität-/dichte. Beispielsweise weist der Bohrer einen Durchmesser von 2,85 mm auf. Der Bohrer umfasst vorzugsweise einen Keramikbohrer. Ein Keramik-Senkbohrer, vorzugsweise mit einem Durchmesser von 4,4 mm, kann zum Ausbilden eines Senkloches bzw. einer kegelförmigen Erweiterung verwendet werden. Der Keramikbohrer und der Keramik-Senkbohrer kann eine Materialkombination aus Zirkoniumdioxid-Keramik, vorzugsweise eine Materialkombination aus einem Zirkonoxid (ZrO₂) und einem Aluminiumoxid (Al₂O₃) oder eine Materialkombination aus einem Zirkonoxid (ZrO₂) und einem Dierbiumtrioxid (Er₂O₃) umfassen.

Das temporäre Zahnimplantat kann als Hilfsmittel zum Befestigen von Augmentaten bei Knochendefekten wie Osteosynthese, Rekonstruktionen, Implantologie und bei der Mund- und-, Kiefer,- und Gesichtschirurgie dienen. Ferner kann das temporären Zahnimplantat auch beim Anbringen und Halten von Prothesen verwendet werden.

Bevorzugterweise ist das Zirkonoxid (ZrO₂) Yttrium stabilisiert.

Vorteilhafterweise umfasst die Konzentration des Zirkonoxids mehr als 80 Gew%, insbesondere mehr als 90 Gew%, bevorzugterweise mehr als 94,5 Gew%.

Bevorzugterweise umfasst die Konzentration des Aluminiumoxids weniger als 10 Gew%, insbesondere weniger als 7 Gew%, bevorzugterweise weniger als 5,5 Gew%.

Vorteilhafterweise umfasst das Dierbiumtrioxid (Er₂O₃) eine Konzentration von weniger als 10 Gew%, insbesondere von weniger als 7 Gew%, bevorzugterweise von weniger als 5 Gew%. Diese Materialkombination von Zirkonoxid (ZrO₂) und Dierbiumtrioxid (Er₂O₃) stellt eine hochfeste Keramik zur Verfügung.

Die Herstellung einer Materialkombination aus einem Zirkonoxid (ZrO₂) und einem Aluminiumoxid (Al₂O₃) oder einer Materialkombination aus einem Zirkonoxid (ZrO₂) und einem Dierbiumtrioxid (Er₂O₃) erfolgt bevorzugterweise in einem HIP-Prozess. Unter HIP versteht man heißisostatisches Pressen. Dies ist eine Entwicklung in der Fertigungstechnik, bei der Pulver und Feststoffe, besonders Keramiken und Metalle, gleichzeitig heiß gepresst und gesintert werden.

Die temporären Zahnimplantate werden einem HIP-Prozess unterzogen, um die Qualität zu steigern, Hierdurch können insbesondere das Gefüge verdichtet werden und Nano-Risse können verkleinert bzw. geschrumpft werden.

Ein temporäres Zahnimplantat kann einen Schraubkörper und einen Schraubenkopf umfassen.

Bei der temporären Zahnimplantatsausführung ist das Folgende zu berücksichtigen.

Der Schraubenkörper kann vorteilhafterweise einen Durchmesser im Gewindekern von 1,0 mm bis 4,5 mm, insbesondere einen Durchmesser im Gewindekern von 1,5 mm bis 4,0 mm, bevorzugterweise einen Durchmesser im Gewindekern von 2,0 mm bis 3,5 mm, aufweisen.

Der Schraubkörper weist vorteilhafterweise eine Gewindelänge von 8 mm bis 18 mm auf. Die Gesamtlänge des Schraubkörpers kann zwischen 10 mm bis 25 mm, vorzugsweise zwischen 14 mm und 20 mm, liegen.

In einem bevorzugten Ausführungsbeispiel umfasst das temporäre Zahnimplantat an dem Schraubenkörper ein durchgängiges Gewinde bis an den Schraubenkopf. Vorteilhafterweise kann hierdurch das Ein- und Herausschrauben des temporären Zahnimplantates sichergestellt werden.

Die Oberflächen bleiben nach der mechanischen Bearbeitung unbehandelt. Dadurch kann ein Anwachsen des Zahnimplantats am Knochen verzögert werden. Die Kanten des Schraubkörpers sind vorteilhafterweise gebrochen.

Es ist von Vorteil, dass das temporäre Zahnimplantat ein Drehmoment bis zu 100 Ncm standhält, ohne Schaden zu nehmen. Beim Eindrehen des temporären Zahnimplantats in den Kiefer eines Patienten treten Drehmomentkräfte von 30 bis 35 Ncm auf, wodurch eine hohe Sicherheit bereitgestellt werden kann. Der Sicherheitsfaktor beträgt größer 3. Ferner kann hierdurch verhindert werden, dass die temporären Zahnimplantate beim Eindrehen nicht brechen. Der Schraubenadapter weist einen Sicherheitsfaktor von größer 4 auf.

Vorzugsweise umfasst ein temporäres Zahnimplantat, die folgenden Maßkombinationen:
a)
   Gesamtlänge 10mm
   Gewindelänge 7,2mm
   Gewindekern 1,6 mm
   Schlüsselweite SW 3 mm
b)
   Gesamtlänge 12 mm
   Gewindelänge 9,2 mm
   Gewindekern 1,6 mm
   Schlüsselweite SW 3 mm
c)
   Gesamtlänge 14 mm
   Gewindelänge 11,2 und 7,2 mm
   Gewindekern 2 mm
   Schlüsselweite SW 3 mm
d)
   Gesamtlänge 16 mm
   Gewindelänge 12 mm
   Gewindekern 2,4 mm
   Schlüsselweite SW 3 mm
e)
   Gesamtlänge 18 mm
   Gewindelänge 14,5 mm
   Gewindekern 2,4 mm
   Schlüsselweite SW 3 mm
f)
   Gesamtlänge 20 mm
   Gewindelänge 14,5 mm
   Gewindekern 2,4 mm
   Schlüsselweite SW 3 mm
g)
   Gesamtlänge 18 mm
   Gewindelänge 15,4 mm
   Gewindekern 2,4mm
   Schlüsselweite SW 3 mm
h)
   Gesamtlänge 10 mm
   Gewindelänge 6,0 mm
   Gewindekern 1,6 mm
   Schlüsselweite 3mm
i)
   Gesamtlänge 12 mm
   Gewindelänge 8,0 mm
   Gewindekern 1,6 mm
   Schlüsselweite 3 mm

Temporäre Zahnimplantate weisen im Unterschied zu größeren medizinischen Schrauben aufgrund ihres Einsatzgebietes im Bereich der Fixation sehr kleine und multiple, räumlich verteilte Knochenfragmente im Kieferknochenbereich als andere Festigkeitsanforderungen auf. Die Festigkeit und Fixation sind stabiler als bei Metallschrauben.

Das erfindungsgemäße Verfahren zur Herstellung eines Zahnimplantats, vorzugsweise einer Mikro-Osteosyntheseschraube, in einem HIP-Zyklus umfasst die folgenden Schritte:
- Bereitstellen eines Druckbehälters,
- Bestücken des Druckbehälters mit einem noch rohen Zahnimplantats, vorzugsweise mit einer noch rohen Mikro-Osteosyntheseschraube,
- Evakuieren des Druckbehälters für eine Zeitdauer von ca. 5 Minuten bei einem Druck von ca. 1,2 mbar,
- Spülen des Druckbehälters mit einem Schutzgas,
- erneutes Evakuieren des Druckbehälters für eine Zeitdauer von ca. 5 Minuten bei einem Druck von ca. 1,2 mbar,
- Druckaufbau auf bis ca. 200 bar,
- Aufheizen mit einer Rate von 10 K/min auf eine Temperatur von ca. 1350°C,
- Während des Aufheizens, Erhöhung des Druckes im Druckbehälter auf ca. 1.500 bar,
- Halten dieses Zustandes für eine Zeitdauer von ca. 2 Stunden bei einer Temperatur von 1.350 °C und einem Druck von ca. 1.500 bar, und anschließend
- natürliche Abkühlung auf eine Temperatur von ca. 300 °C,
- Dekomprimieren auf Atmosphärendruck,
- Entnahme des Zahnimplantats bzw. der Mikro-Osteosyntheseschraube.

Der Fachmann erkennt, dass gleichzeitig mehrere temporäre Zahnimplantate mittels des Herstellungsverfahrens herstellbar sind.

In einer bevorzugten Ausführungsform wird in einem HIP-Zyklus das Material Zirkonoxid (ZrO₂), insbesondere Yttrium-Zirkonoxid, mit 94,80% Gew% und Aluminiumoxid (Al₂O₃) mit < 5 Gew% heißisostatisch nachverdichtet.

Der HIP-Zyklus wird bevorzugterweise nach einem definierten Temperatur-Druck-Programm in einer Schutzgas-Atmosphäre durchgeführt:
In Vorbereitung auf den HIP-Prozess wird ein mit Proben bestückter Druckbehälter für eine Dauer von 5 min bei etwa 1,2 mbar evakuiert. Nach 3 Spüldurchläufen mit einem Schutzgas wie beispielsweise Argon wird der Druckbehälter erneut für eine Dauer von 5 min bei etwa 1,2 mbar evakuiert.

Anschließend erfolgt ein Druckaufbau bis 200 bar. Dann wird mit einer Rate von 10 K/min auf ca. 1350°C aufgeheizt. Während des Aufheizprozesses erfolgt ein weiterer Druckaufbau bis ca. 1500 bar.

Nach einer Haltezeit von ca. zwei Stunden bei 1350 °C und 1500 bar erfolgt eine natürliche Kühlung auf ca. 300 °C. Im Anschluss danach wird auf Atmosphärendruck dekomprimiert.

Ein temporäres Zahnimplantat, welches nach dem vorgenannten HIP-Verfahren hergestellt ist, weist überraschenderweise hohe mechanische Festigkeiten auf. Ferner ist von Vorteil, dass das erfindungsgemäße temporäre Zahnimplantat, das eine Materialkombination aus Zirkonoxid und Aluminiumoxid umfasst, eine hohe Verträglichkeit im Vergleich mit den bisher verwendeten Metallen, Metalllegierungen oder Hybridmaterialien wie Titan- oder Chrom-Kobalt-Molybdän-Legierungen und eine sehr gute Integrierbarkeit in den Ziel-Organismus aufweist.

In einer besonders vorteilhaften Ausgestaltung wird ein temporäres Zahnimplantat bereitgestellt, die eine Materialkombination aus Zirkonoxid (ZrO₂), insbesondere Yttrium-Zirkonoxid, mit 94,80% Gew% und Aluminiumoxid (Al₂O₃) mit < 5 Gew% umfasst, die heiß-isostatisch nachverdichtet ist. Das temporäre Zahnimplantat kann an seiner Oberfläche Vorsprünge aufweisen, welche die Oberfläche eines Zahnimplantat-Verbindungselements, bezüglich des Knochengewebes, in welches das Zahnimplantat-Verbindungselement einbringbar ist, vergrößern kann und dadurch die Festigkeit der Verbindung zwischen dem Zahnimplantat-Verbindungselement und dem Knochengewebe unterstützen kann und dabei mit dem Knochengewebe des Ziel-Organismus verträglich und ohne Absplitterungen des temporären Zahnimplantats integrierbar ausbildbar ist.

Das temporäre Zahnimplantat weist vorteilhafterweise eine definierte Querschnittsebene q mit einem definierten Querschnitt Q und eine definierte Länge L auf. Der Querschnitt Q durch das temporäre Zahnimplantat, weist im größten Durchmesser zur Länge L des temporären Zahnimplantats ein Verhältnis von > 2 auf. Das heißt, das temporäre Zahnimplantat ist länger als ihr Querschnitt Q. Eine Achse, die im Wesentlichen parallel, d.h. in einem Winkel von <= +- 70 Grad, vorzugsweise im Winkel von 90 Grad +- 5 Grad zur Querschnittsebene q entlang der Länge L des temporären Zahnimplantats verläuft, wird in der Folge als Längsachse des temporären Zahnimplantats bezeichnet. Der Querschnitt Q entlang der Längsachse L des temporären Zahnimplantats kann variieren.

Entlang der Längsachse auf der Oberfläche eines Querschnitts Q des temporären Zahnimplantats angeordnete Vorsprünge können gewindeartig um einen Kern mit einem runden Querschnitt Q des temporären Zahnimplantats, angeordnet sein und eine Höhe von 10% bis 30% des an der jeweiligen Position entlang der Längsachse des Implantat-Verbindungselements herrschenden Gesamtdurchmessers des Querschnitts des temporären Zahnimplantats aufweisen. Der Kern kann entlang seiner Längsachse zylindrisch oder auch wenigstens teilweise kegelförmig ausgeführt sein, um je nach Einsatzort im Knochengewebe die Integrierbarkeit des temporären Zahnimplantats zu unterstützen.

Der Fachmann erkennt, dass das temporäre Zahnimplantat auch stiftartig zum Vorschub, beispielsweise zum Einpressen in das Knochengewebe ausgeführt sein kann und dabei beliebige Querschnittsform aufweisen kann, wobei die Vorsprünge passend zur Vorschubrichtung entlang der Längsachse des temporären Zahnimplantats angeordnet sind.

Der Fachmann erkennt ferner, dass die zuvor beschriebene bevorzugte Ausführungsform auch einen HIP-Zyklus mit der Materialkombination einem Zirkonoxid (ZrO₂) und einem Dierbiumtrioxid (Er₂O₃) entsprechend durchlaufen kann.

Die vorliegende Erfindung bezieht sich auch auf einen Schraubenadapter zum Ein- und/oder Herausdrehen eines erfindungsgemäßen temporären Zahnimplantats, umfassend eine Schraubenaufnahme und einen Schraubenkörper, wobei die Schraubenaufnahme eine Zirkoniumdioxid-Keramik umfasst, bevorzugterweise eine Materialkombination aus einem Zirkonoxid (ZrO₂) und einem Aluminiumoxid (Al₂O₃) oder eine Materialkombination aus einem Zirkonoxid (ZrO₂) und einem Dierbiumtrioxid (Er₂O₃) umfasst. Beim Ein- und/oder Herausdrehen des temporären Zahnimplantats mittels der Schraubenaufnahme des Schraubenadapters aus einer Zirkoniumdioxid-Keramik, bevorzugterweise aus einer Materialkombination aus einem Zirkonoxid (ZrO₂) und einem Aluminiumoxid (Al₂O₃) oder einer Materialkombination aus einem Zirkonoxid (ZrO₂) und einem Dierbiumtrioxid (Er₂O₃), wird ein keimfreies und steriles Arbeiten ermöglicht und ein Abrieb am Schraubenkopf des temporären Zahnimplantats vermieden. Bei der Verwendung eines Schraubenadapters aus Metallen oder Metalllegierungen wie beispielsweise Stahl, Stahllegierungen, Titan, Titanlegierungen oder Chrom-Kobalt-Molybdän-Legierungen, hat das Ein- und/oder Herausdrehen eines temporären Zahnimplantats einen Abrieb zur Folge. Ein Abrieb eines Metalls oder einer Metalllegieren sollte vermieden werden, da zum einen der Abrieb im Mund eines Patienten verbleiben kann und der Patient den Abrieb verschlucken könnte. Ferner hat ein Abrieb zur Folge, dass beim Herausdrehen des temporären Zahnimplantats die Schraubenaufnahme nicht mehr richtig greift und das Herausdrehen nicht mehr oder nur schwer möglich ist.

Der Schraubenkörper des Schraubenadapters umfasst eine Zirkoniumdioxid-Keramik, insbesondere eine Materialkombination aus einem Zirkonoxid (ZrO₂) und einem Aluminiumoxid (Al₂O₃) oder eine Materialkombination aus einem Zirkonoxid (ZrO₂) und einem Dierbiumtrioxid (Er₂O₃). Dies bietet den Vorteil, dass eine Reaktion mit Körperflüssigkeiten vermieden wird, ein Angreifen verhindert wird, selbst wenn diese Materialien und Materialkombinationen starken Säuren ausgesetzt werden. Ein Schraubenkörper des Schraubenadapters aus einer Zirkoniumdioxid-Keramik, insbesondere aus einer Materialkombination aus einem Zirkonoxid (ZrO₂) und einem Aluminiumoxid (Al₂O₃) oder einer Materialkombination aus einem Zirkonoxid (ZrO₂) und einem Dierbiumtrioxid (Er₂O₃) stellt ein stabiles, korrosionsbeständiges und langlebiges Bauteil zur Verfügung.

Vorteilhafterweise kann die Zirkoniumdioxid-Keramik eine TZP-Keramik, eine ATZ-Keramik, eine ZTA-Keramik und/oder TZ-PX-525-Keramik umfassen.

### 5. Kurze Beschreibung der Zeichnungen

Im Folgenden werden anhand von Figuren Ausführungsbeispiele der vorliegen Erfindung beschrieben. Diese Figuren zeigen in
- Fig. 1: eine Prinzipdarstellung eines erfindungsgemäßen temporären Zahnimplantats,
- Fig 2: eine bevorzugte Ausführungsform eines temporären Zahnimplantats mit gewindeförmigen Vorsprüngen, mit einem Gewindekern von 1,6 mm und einer Gewindelänge von 7,2 mm,
- Fig. 2a: eine bevorzugte Ausführungsform eines temporären Zahnimplantats mit gewindeförmigen Vorsprüngen, mit einem Gewindekern von 1,6 mm und einer Gewindelänge von 6,0 mm,
- Fig 3: eine bevorzugte Ausführungsform eines temporären Zahnimplantats mit gewindeförmigen Vorsprüngen, mit einem Gewindekern von 1,6 mm und einer Gewindelänge von 9,2 mm,
- Fig. 3a: eine bevorzugte Ausführungsform eines temporären Zahnimplantats mit gewindeförmigen Vorsprüngen, mit einem Gewindekern von 1,6 mm und einer Gewindelänge von 8,0 mm,
- Fig 4a: eine weitere bevorzugte Ausführungsform eines temporären Zahnimplantats mit gewindeförmigen Vorsprüngen, mit einem Gewindekern von 2 mm und einer Gewindelänge von 11,2 mm,
- Fig. 4b: eine weitere bevorzugte Ausführungsform eines temporären Zahnimplantats mit gewindeförmigen Vorsprüngen, mit einem Gewindekern von 2 mm und einer Gewindelänge von 7,2 mm,
- Fig 5: eine weitere bevorzugte Ausführungsform eines temporären Zahnimplantats mit gewindeförmigen Vorsprüngen, mit einem Gewindekern von 2,4 mm und einer Gewindelänge von 12 mm,
- Fig 6: eine weitere bevorzugte Ausführungsform eines temporären Zahnimplantats mit gewindeförmigen Vorsprüngen, mit einem Gewindekern von 2,4 mm und einer Gewindelänge von 14,5 mm und einer Gesamtlänge von 18 mm,
- Fig 7: eine weitere bevorzugte Ausführungsform eines temporären Zahnimplantats mit gewindeförmigen Vorsprüngen, mit einem Gewindekern von 2,4 mm und einer Gewindelänge von 14,5 mm und einer Gesamtlänge von 20 mm,
- Fig. 8: eine weitere bevorzugte Ausführungsform eines temporären Zahnimplantats mit gewindeförmigen Vorsprüngen, mit einem Gewindekern von 2,4 mm und einer Gewindelänge von 15,4 mm und einer Gesamtlänge von 18 mm,
- Fig. 9a: und Fig. 9b. einen erfindungsgemäßen Schraubenadapter zum Ein- und/oder Herausdrehen eines temporären Zahnimplantats und
- Fig. 10: unterschiedliche Ansichten einer bevorzugten Ausführungsform eines Schraubenadapters,
- Fig. 11: einen Temperatur-Druck-Verlauf einer bevorzugten Ausführungsform eines HIP-Zyklus, und
- Fig. 12: eine schematische Ansicht einer Bohrung und eines Einsetzens eines temporären Zahnimplantats in einen Basisknochen eines Patienten.

### 6. Detaillierte Beschreibung

Ausführungsbeispiele der vorliegenden Erfindung werden nachfolgend beispielhaft beschrieben.

Gleiche Bauteile wurden mit gleichen Bezugszeichen versehen.

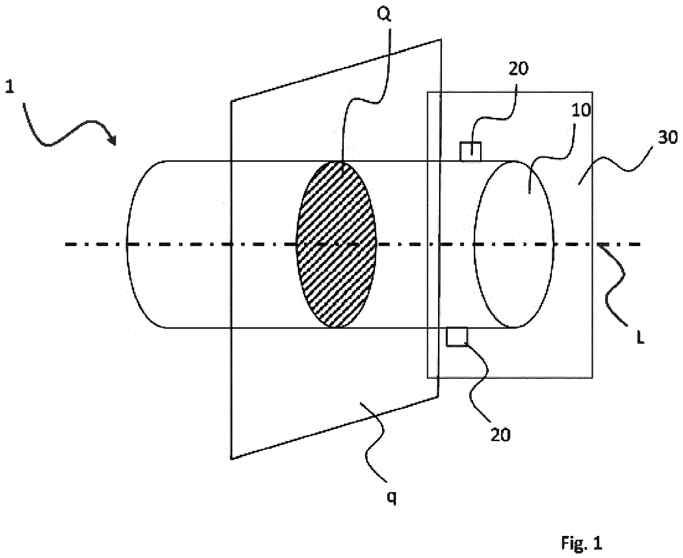

Fig. 1 zeigt eine Prinzipdarstellung eines Implantat-Verbindungselements, welches vorzugsweise als temporäres Zahnimplantat ausgeführt ist.

Ein temporäres Zahnimplantat 1 umfasst eine Materialkombination aus einem Zirkonoxid (ZrO₂), insbesondere Yttrium-Zirkonoxid, mit 94,80% Gew% und Aluminiumoxid (Al₂O₃) mit < 5 Gew%, wobei die Materialkombination heißisostatisch nachverdichtet ist. Das temporäre Zahnimplantat 1 weist an einer Oberfläche eines Kerns 10 Vorsprünge 20 auf, welche die Oberfläche des temporären Zahnimplantats 1 bezüglich eines Knochengewebes 30, in welches das temporäres Zahnimplantat 1 einbringbar ist, vergrößert. Dadurch wird die Festigkeit der Verbindung zwischen dem temporären Zahnimplantat 1 und dem Knochengewebe 30 unterstützt und erhöht. Dabei entsteht eine mit dem Knochengewebe 30 des Ziel-Organismus verträgliche Ausgestaltung, wobei das temporäre Zahnimplantat 1 ohne Absplitterungen integrierbar ist.

Das temporäre Zahnimplantat 1 weist entlang der Längsachse jeweils eine definierte Querschnittsebene q mit einem potenziell variierenden definierten Querschnitt Q und einer definierten Länge auf. Der Querschnitt Q durch das temporäre Zahnimplantat 1 weist im größten Durchmesser zur Länge des temporären Zahnimplantats 1 ein Verhältnis von > 2 auf. Das heißt, das temporäre Zahnimplantat 1 ist länger als ihr Querschnitt Q. Der Querschnitt Q entlang der Längsachse L des temporären Zahnimplantats 1 kann variieren.

Die Vorsprünge 20 des temporären Zahnimplantats 1 sind gewindeartig um den Kern 10 mit einem runden Querschnitt Q des temporären Zahnimplantats 1 angeordnet und weisen eine Höhe von bis zu 30%, insbesondere von bis zu 20% des an der jeweiligen Position entlang der Längsachse des temporären Zahnimplantats 1 herrschenden Gesamtdurchmessers des Querschnitts Q des temporären Zahnimplantats 1 auf. Das temporäre Zahnimplantat 1 ist in das Knochengewebe 30 integrierbar. Der Kern 10 kann entlang seiner Längsachse L zylindrisch oder auch wenigstens teilweise kegelförmig ausgeführt sein, um je nach Einsatzort im Knochengewebe 30 die Integrierbarkeit des temporären Zahnimplantats 1 zu unterstützen.

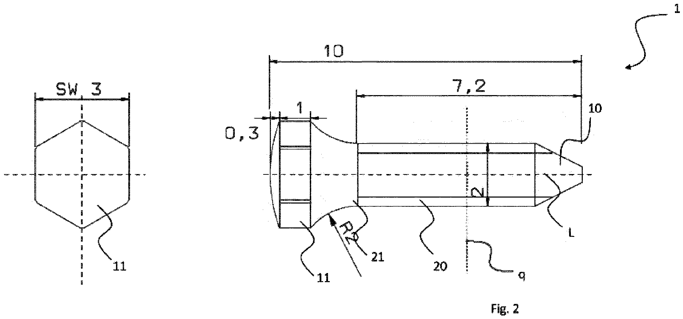

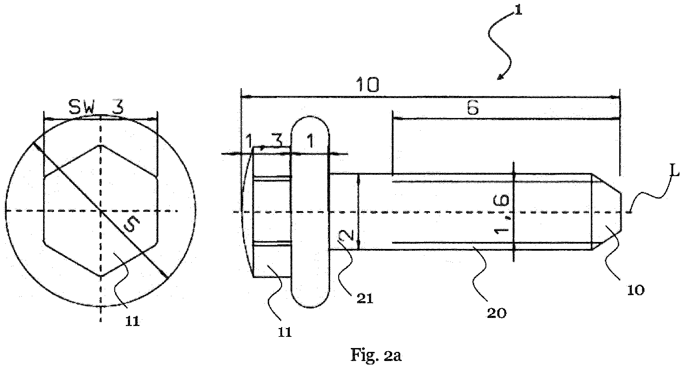

Das temporäre Zahnimplantat 1 umfasst einen Kern 10 mit Vorsprüngen 20 und umfasst einen Schraubkörper 21 und einen Schraubenkopf 11 (siehe Figuren 2 bis 7). Beim Schraubkopf 11 sind die Kanten gebrochen. Es soll dadurch verhindert werden, dass die Schleimhaut eines Patienten reißt, denn über die Schleimhaut wird das Augmentat mit Blut versorgt. Die Oberflächen des temporären Zahnimplantats 1 sind nicht bearbeitet, insbesondere nicht aufgeraut, so dass ein Anwachsen des temporären Zahnimplantats 1 am Knochen verzögert werden kann.

In einem weiteren Ausführungsbeispiel kann das temporäre Zahnimplantat 1 als Zahnimplantat-Verbindungselement stiftartig zum Vorschub, beispielsweise zum Einpressen in das Knochengewebe, ausgeführt sein und kann dabei eine beliebige Querschnittsform Q aufweisen, wobei die Vorsprünge 20 passend zur Vorschubrichtung entlang der Längsachse L des Zahnimplantat-Verbindungselements auf der Oberfläche des Kerns 10 angeordnet sind.

Fig 2 zeigt ein bevorzugtes Ausführungsbeispiel eines temporären Zahnimplantats 1 umfassend mit gewindeförmigen Vorsprüngen 20 mit einem Gewindekern von 1,6 mm, einer Gesamtlänge von 10 mm und einer Gewindelänge von 7,2 mm.

Fig 2a zeigt ein bevorzugtes Ausführungsbeispiel eines temporären Zahnimplantats 1 umfassend mit gewindeförmigen Vorsprüngen 20 mit einem Gewindekern von 1,6 mm, einer Gesamtlänge von 10 mm und einer Gewindelänge von 6,0 mm.

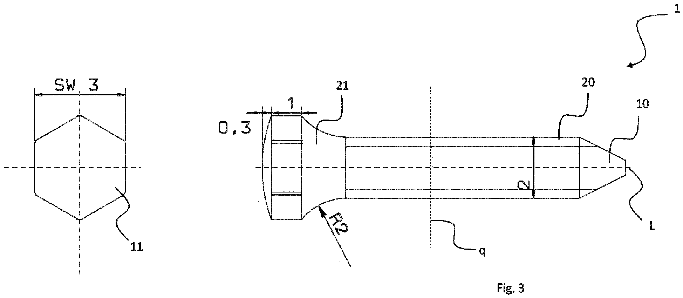

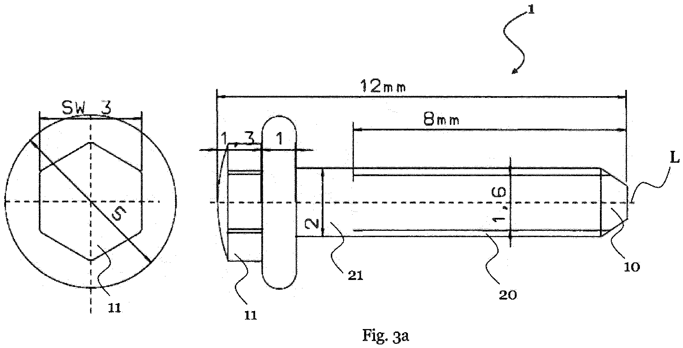

Fig 3 zeigt ein weiteres bevorzugtes Ausführungsbeispiel eines temporären Zahnimplantats 1 mit gewindeförmigen Vorsprüngen 20 mit einem Gewindekern von 1,6 mm, einer Gesamtlänge von 10 mm und einer Gewindelänge von 9,2 mm.

Fig 3a zeigt ein weiteres bevorzugtes Ausführungsbeispiel eines temporären Zahnimplantats 1 mit gewindeförmigen Vorsprüngen 20 mit einem Gewindekern von 1,6 mm, einer Gesamtlänge von 12 mm und einer Gewindelänge von 8,0 mm.

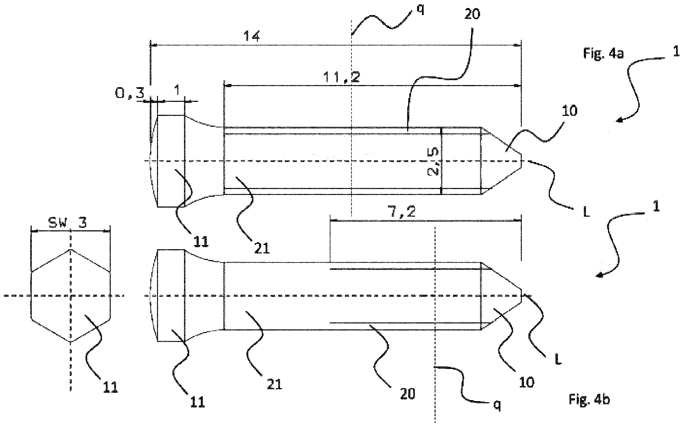

Fig. 4a ein weiteres bevorzugtes Ausführungsbeispiel eines temporären Zahnimplantats 1 mit gewindeförmigen Vorsprüngen 20 mit einem Gewindekern von 2 mm, einer Gesamtlänge von 14 mm und einer Gewindelänge von 11,2mm.

Fig. 4b ein weiteres bevorzugtes Ausführungsbeispiel eines temporären Zahnimplantats 1 mit gewindeförmigen Vorsprüngen 20 mit einem Gewindekern von 2 mm, einer Gesamtlänge von 14 mm und einer Gewindelänge von 7,2mm.

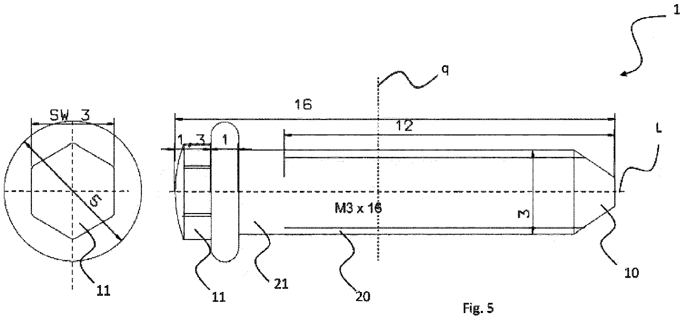

Fig. 5 ein weiteres bevorzugtes Ausführungsbeispiel eines temporären Zahnimplantats 1 mit gewindeförmigen Vorsprüngen 20 mit einem Gewindekern von 2,4 mm, einer Gesamtlänge von 16 mm und einer Gewindelänge von 12 mm.

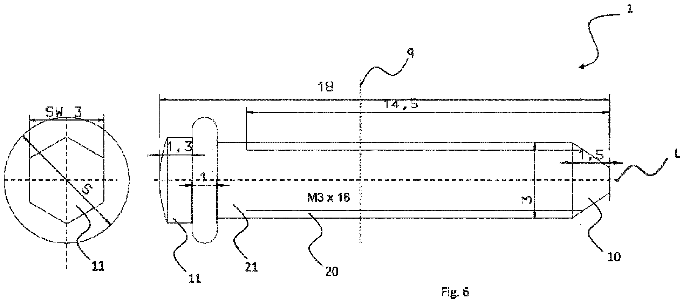

Fig. 6 ein weiteres bevorzugtes Ausführungsbeispiel eines temporären Zahnimplantats 1 mit gewindeförmigen Vorsprüngen 20 mit einem Gewindekern von 2,4 mm und einer Gewindelänge von 14,5 mm und einer Gesamtlänge von 18 mm.

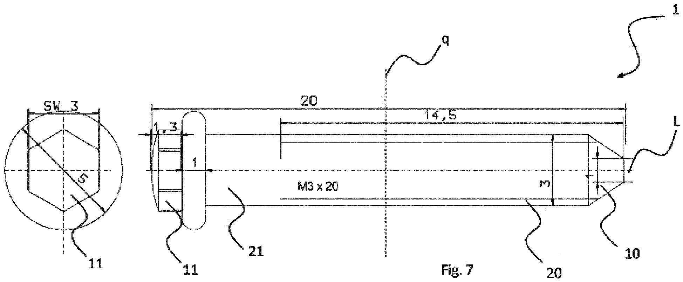

Fig. 7 ein weiteres bevorzugtes Ausführungsbeispiel eines temporären Zahnimplantats 1 mit gewindeförmigen Vorsprüngen 20 mit einem Gewindekern von 2,4 mm und einer Gewindelänge von 14,5 mm und einer Gesamtlänge von 20 mm.

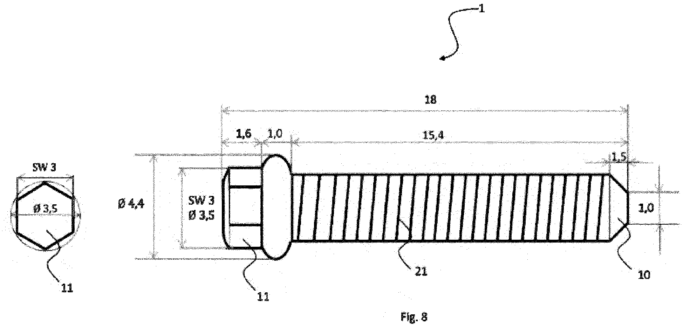

Fig. 8 zeigt eine weitere bevorzugte Ausführungsform eines temporären Zahnimplantats 1 mit gewindeförmigen Vorsprüngen, mit einem Gewindekern von 2,4 mm und einer Gewindelänge von 15,4 mm und einer Gesamtlänge von 18 mm.

Der Fachmann erkennt, dass die bevorzugten Ausführungsformen des erfindungsgemäßen temporären Zahnimplantats, bevorzugterweise Gesamtlängen von 10 mm, 14 mm, 16 mm, 18 mm und 20 mm und bevorzugterweise Gewindelängen von 7,2 mm, 9,2 mm, 11,2 mm, 12 mm, 14,5 mm und 15,4 mm aufweisen. Die Oberflächen der temporären Zahnimplantate sind vorteilhafterweise glatt, nicht aufgeraut bzw. nicht behandelt. Dadurch kann ein Anwachsen des temporären Zahnimplantats am Knochen verzögert werden. Die Kanten des Schraubkörpers 11 sind gebrochen.

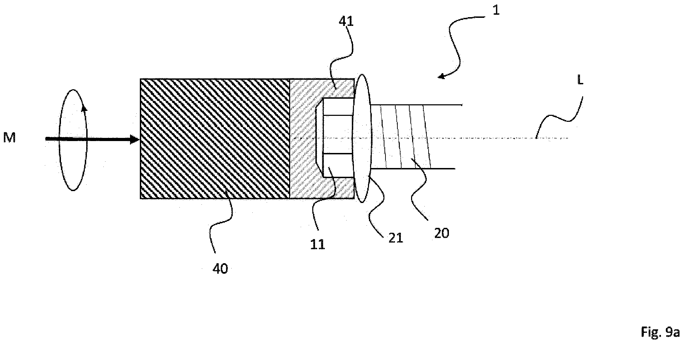

Fig. 9a zeigt einen Schraubenadapter 40 umfassend eine Schraubenaufnahme 41 und ein temporäres Zahnimplantat 1 mit einem Schraubkörper 21. Die Schraubenaufnahme 41 und der Schraubenadapter 40 umfassen vorteilhafterweise einen Körper aus einer Materialkombination aus einem Zirkonoxid (ZrO₂) und einem Aluminiumoxid (Al₂O₃) oder einer Materialkombination aus einem Zirkonoxid (ZrO₂) und einem Dierbiumtrioxid (Er₂O₃). Die Schraubenaufnahme 41 und der Schraubenadapter 40 können auch eine Zirkonium-Keramik wie beispielsweise eine TZP-Keramik, eine ATZ-Keramik und/oder eine ZTA-Keramik und/oder eine TZ-PX-525-Keramik umfassen. Der Schraubkörper 21 aus einer Materialkombination aus einem Zirkonoxid (ZrO₂) und einem Aluminiumoxid (Al₂O₃) oder einer Materialkombination aus einem Zirkonoxid (ZrO₂) und einem Dierbiumtrioxid (Er₂O₃) ist mit einem Schraubenadapter 40 fest verbunden und überträgt ein Drehmoment M von einem Antrieb (nicht dargestellt) auf den Schraubenkopf 11.

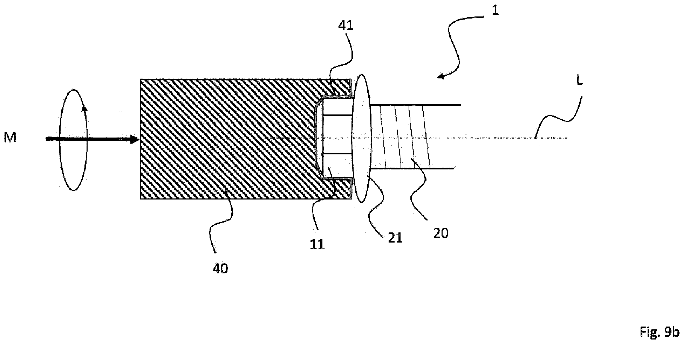

Fig. 9b zeigt einen Schraubenadapter 40 umfassend eine Schraubenaufnahme 41 und ein temporäres Zahnimplantat 1 mit einem Schraubkörper 21. Der Schraubenadapter 40 umfasst in diesem Ausführungsbeispiel einen durchgehenden Körper aus einer Materialkombination aus einem Zirkonoxid (ZrO₂) und einem Aluminiumoxid (Al₂O₃) oder einer Materialkombination aus einem Zirkonoxid (ZrO₂) und einem Dierbiumtrioxid (Er₂O₃), welcher das Drehmoment M von dem Antrieb (nicht dargestellt) auf den Schraubenkopf 11 überträgt. Die Oberfläche des Schraubenadapters 41 umfasst eine Materialkombination aus einem Zirkonoxid (ZrO₂) und einem Aluminiumoxid (Al₂O₃) oder eine Materialkombination aus einem Zirkonoxid (ZrO₂) und einem Dierbiumtrioxid (Er₂O₃) und stellt die Schraubenaufnahme 41 bereit.

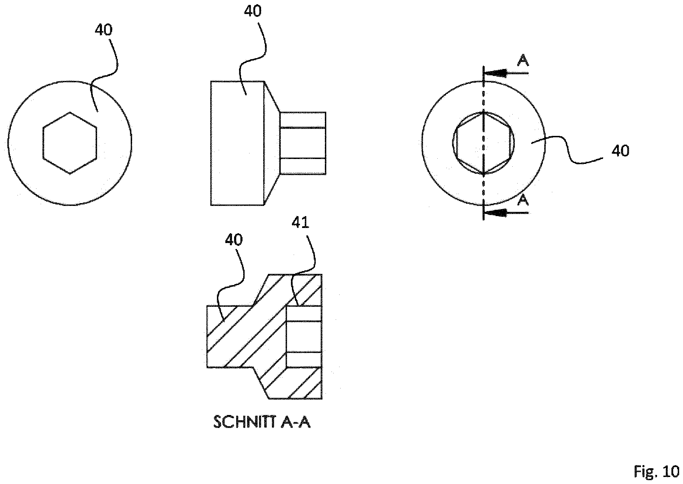

Fig. 10 zeigt unterschiedliche Ansichten einer bevorzugten Ausführungsform eines Schraubenadapters 40.

Die verwendeten Materialien aus einer Materialkombination aus einem Zirkonoxid (ZrO₂) und einem Aluminiumoxid (Al₂O₃) oder einer Materialkombination aus einem Zirkonoxid (ZrO₂) und einem Dierbiumtrioxid (Er₂O₃) sowie deren Materialkombinationen weisen die vorteilhaften Materialeigenschaften auf, dass sie neutral, biokompatibel, nicht metallisch, nicht magnetisch, nicht stromleitend und nicht radioaktiv sind. Diese Materialien und Materialkombinationen reagieren nicht mit Körperflüssigkeiten. Selbst wenn diese Materialien und Materialkombinationen starken Säuren ausgesetzt werden, werden diese Materialien nicht angegriffen. Sie sind stabil, korrosionsbeständig und langlebig. Es wird ein keimfreies und steriles Ein- und/oder Herausschrauben des temporären Zahnimplantats ermöglicht und es wird ein Abrieb am Schraubenkopf des temporären Zahnimplantats vermieden.

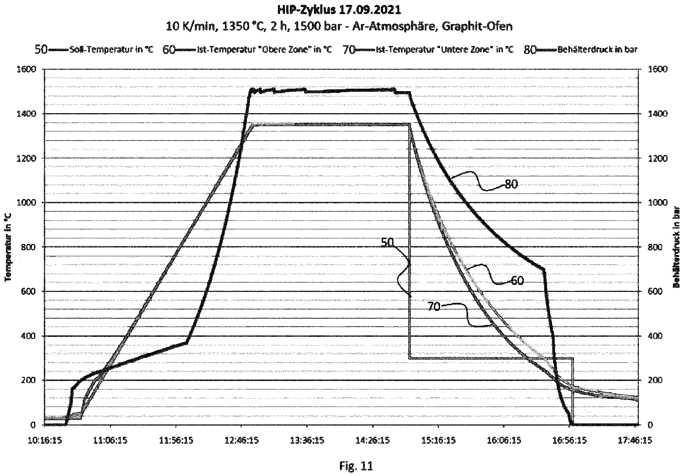

Fig. 11 zeigt einen Temperatur-Druck-Verlauf einer bevorzugten Ausführungsform eines HIP-Zyklus.

In Vorbereitung auf einen HIP-Prozess wird ein mit Proben bestückter Druckbehälter für eine Dauer von 5 min bei etwa 1,2 mbar evakuiert. Nach 3 Spüldurchläufen mit einem Schutzgas wie beispielsweise Argon wird der Druckbehälter erneut für eine Dauer von ca. 5 min bei etwa 1,2 mbar evakuiert.

Anschließend erfolgt ein Druckaufbau bis 200 bar. Dann wird mit einer Rate von 10 K/min auf ca. 1350°C aufgeheizt. Während des Aufheizprozesses erfolgt ein weiterer Druckaufbau bis ca. 1500 bar.

Nach einer Haltezeit von ca. zwei Stunden bei 1350 °C und 1500 bar erfolgt eine natürliche Kühlung auf ca. 300 °C. Im Anschluss danach wird auf Atmosphärendruck dekomprimiert.

Das Verfahren zur Herstellung eines temporären Zahnimplantats 1, vorzugsweise einer Mikro-Osteosyntheseschraube, in einem HIP-Zyklus umfasst die folgenden Schritte:
- Bereitstellen eines Druckbehälters,
- Bestücken des Druckbehälters mit einem noch rohen Zahnimplantats 1, vorzugsweise mit einer noch rohen Mikro-Osteosyntheseschraube 1,
- Evakuieren des Druckbehälters für eine Zeitdauer von ca. 5 Minuten bei einem Druck von ca. 1,2 mbar,
- Spülen des Druckbehälters mit einem Schutzgas,
- erneutes Evakuieren des Druckbehälters für eine Zeitdauer von ca. 5 Minuten bei einem Druck von ca. 1,2 mbar,
- Druckaufbau auf bis ca. 200 bar,
- Aufheizen mit einer Rate von 10 K/min auf eine Temperatur von ca. 1350°C,
- Während des Aufheizens, Erhöhung des Druckes im Druckbehälter auf ca. 1.500 bar,
- Halten dieses Zustandes für eine Zeitdauer von ca. 2 Stunden bei einer Temperatur von 1.350 °C und einem Druck von ca. 1.500 bar, und anschließend
- natürliche Abkühlung auf eine Temperatur von ca. 300 °C,
- Dekomprimieren auf Atmosphärendruck,
- Entnahme des Zahnimplantats 1, bzw. der Mikro-Osteosyntheseschraube.

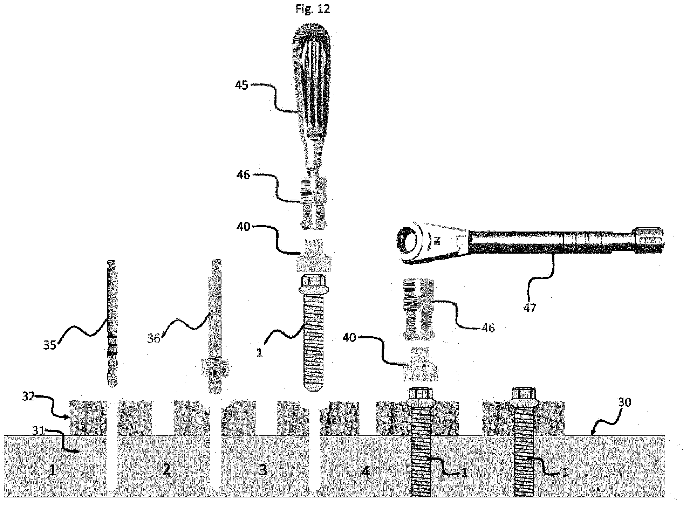

Figur 12 ist eine schematische Ansicht einer Bohrung und eines Einsetzens eines temporären Zahnimplantats in einen Basisknochen eines Patienten.

Ein Verfahren zum Einsetzen eines erfindungsgemäßen temporären Zahnimplantats 1 in einen Basisknochen 31 eines Patienten umfasst die folgenden Schritte:
- Setzen einer Bohrung durch ein Augmentat 32 und in einen Basisknochen 31 eines Patienten mittels eines Bohrers 35 aus einer Keramiklegierung vorzugsweise umfassend eine Zirkoniumdioxid-Keramik,
- Ausbilden eines Senkloches mittels eines Senkbohrers 36 aus einer Keramiklegierung, vorzugsweise umfassend eine Zirkoniumdioxid-Keramik, insbesondere umfassend eine Materialkombination aus einem Zirkonoxid (ZrO₂) und einem Aluminiumoxid (Al₂O₃) oder eine Materialkombination aus einem Zirkonoxid (ZrO₂) und einem Dierbiumtrioxid (Er₂O₃),
- Fixierung eines temporären Zahnimplantats 1 im Augmentat 32 mit Hilfe eines Schraubenadapters 40 umfassend eine Schraubenaufnahme 41 und einen Schraubenkörper, wobei die Schraubenaufnahme 41 eine Zirkoniumdioxid-Keramik umfasst, insbesondere eine Materialkombination aus einem Zirkonoxid (ZrO₂) und einem Aluminiumoxid (Al₂O₃) oder eine Materialkombination aus einem Zirkonoxid (ZrO₂) und einem Dierbiumtrioxid (Er₂O₃) umfasst.

Bei der Fixierung des temporären Zahnimplantats 1 wird abhängig vom Durchmesser des temporären Zahnimplantats 1 ein maximal zulässiges Drehmoment angesetzt. Zunächst wird mittels eines Schraubendrehers 45 eine erste Fixierung des temporären Zahnimplantats vorgenommen. Der Schraubendreher 45 umfasst einen weiteren Schraubenadapter, der in Eingriff mit dem Schraubenadapter 40 bringbar ist. Die abschließende Fixierung erfolgt mittels einer Drehmomentratsche 47. Hierdurch wird sichergestellt, dass das maximal zulässige Drehmoment nicht überschritten wird und eine Beeinträchtigung oder Beschädigung des temporären Zahnimplantats 1 verhindert wird.

### Liste der verwendeten Bezugszeichen:

- 1: Temporäres Zahnimplantat
- 10: Kern
- 11: Schraubenkopf
- 20: Vorsprung
- 21: Schraubkörper
- 30: Knochengewebe
- 31: Basisknochen
- 32: Augmentat
- q: Querschnittsebene
- Q: Querschnitt
- L: Längsachse
- 35: Bohrer
- 36: Senkbohrer
- 40: Schraubenadapter
- 41: Schraubenaufnahme
- 45: Schraubendreher für Schraubenadapter
- 46: weiterer Schraubenadapter
- 47: Drehmomentratsche
- 50: Soll-Temperatur in °C
- 60: Ist-Temperatur "Obere Zone" in °C
- 70: Ist-Temperatur "Untere Zone" in °C
- 80: Behälterdruck in bar

## Patentansprüche

1. Temporäres Zahnimplantat (1) umfassend eine Materialkombination aus einem Zirkonoxid (ZrO₂) und einem Aluminiumoxid (Al₂O₃) oder eine Materialkombination aus einem Zirkonoxid (ZrO₂) und einem Dierbiumtrioxid (Er₂O₃).

2. Temporäres Zahnimplantat nach Anspruch 1, **dadurch gekennzeichnet, dass** das temporäres Zahnimplantat als Mikro-Osteosyntheseschraube ausgebildet ist.

3. Temporäres Zahnimplantat (1) nach Anspruch 1, **dadurch gekennzeichnet, dass** das Zirkonoxid (ZrO₂) Yttrium stabilisiert ist.

4. Temporäres Zahnimplantat (1) nach Anspruch 1 oder 3, **dadurch gekennzeichnet, dass** das Zirkonoxids (ZrO₂) eine Konzentration von mehr als 80 Gew%, insbesondere von mehr als 90 Gew%, bevorzugterweise von mehr als 94,5 Gew% aufweist.

5. Temporäres Zahnimplantat (1) nach Anspruch 1, **dadurch gekennzeichnet, dass** das Aluminiumoxid (Al₂O₃) eine Konzentration von weniger als 10 Gew%, insbesondere von weniger als 7 Gew%, bevorzugterweise von weniger als 5,5 Gew% aufweist.

6. Temporäres Zahnimplantat (1) nach Anspruch 1, **dadurch gekennzeichnet, dass** das Dierbiumtrioxid (Er₂O₃) eine Konzentration von weniger als 10 Gew%, insbesondere von weniger als 7 Gew%, bevorzugterweise von weniger als 5 Gew% aufweist.

7. Temporäres Zahnimplantat (1) nach einem der vorherigen Ansprüche, **dadurch gekennzeichnet, dass** die Materialkombination aus einem Zirkonoxid (ZrO₂) und einem Aluminiumoxid (Al₂O₃) oder die Materialkombination aus einem Zirkonoxid (ZrO₂) und einem Dierbiumtrioxid (Er₂O₃) einem HIP-Prozesses unterziehbar ist.

8. Temporäres Zahnimplantat (1) nach Anspruch 1, **dadurch gekennzeichnet, dass** zum Einsetzen des temporären Zahnimplantats (1) ein Vorbohren mittels eines Bohrers im Knochen eines Patienten erforderlich ist.

9. Temporäres Zahnimplantat (1) nach einem der vorherigen Ansprüche, **dadurch gekennzeichnet, dass** das temporäre Zahnimplantat (1) einen Kern (10) und Vorsprünge (20), einen Schraubkörper (21) und einen Schraubenkopf (11) umfasst.

10. Temporäres Zahnimplantat (1) nach Anspruch 9, **dadurch gekennzeichnet, dass** der Schraubenkörper (21) einen Durchmesser im Gewindekern zwischen 1,0 mm bis 4,5 mm, insbesondere einen Durchmesser zwischen 1,6 mm bis 4,0 mm, bevorzugterweise einen Durchmesser im Gewindekern zwischen 2,0 mm bis 3,0 mm, aufweist.

11. Temporäres Zahnimplantat (1) nach Anspruch 9 oder 10, **dadurch gekennzeichnet, dass** der Schraubkörper (21) eine Gewindelänge zwischen 2 mm bis 15 mm aufweist.

12. Temporäres Zahnimplantat (1) nach einem der Ansprüche 9 bis 11, **dadurch gekennzeichnet, dass** die Gesamtlänge des Schraubkörpers (21) zwischen 10 mm bis 25 mm, vorzugsweise zwischen 14 mm und 20 mm, liegt.

13. Temporäres Zahnimplantat (1) nach einem der vorherigen Ansprüche, **dadurch gekennzeichnet, dass** an dem temporären Zahnimplantat (21) ein durchgängiges Gewinde bis an den Schraubenkopf (11) ausgebildet ist.

14. Schraubenadapter (40) zum Ein- und/oder Herausdrehen eines temporären Zahnimplantats (1) gemäß einem der vorherigen Ansprüche 1 bis 13, umfassend eine Schraubenaufnahme (41) und einen Schraubenkörper (21), **dadurch gekennzeichnet, dass** die Schraubenaufnahme (41) eine Zirkoniumdioxid-Keramik umfasst, insbesondere eine Materialkombination aus einem Zirkonoxid (ZrO₂) und einem Aluminiumoxid (Al₂O₃) oder eine Materialkombination aus einem Zirkonoxid (ZrO₂) und einem Dierbiumtrioxid (Er₂O₃) umfasst.

15. Verfahren zur Herstellung eines temporären Zahnimplantats (1), vorzugsweise einer Mikro-Osteosyntheseschraube, in einem HIP-Zyklus umfassend die folgenden Schritte:
- Bereitstellen eines Druckbehälters,
- Bestücken des Druckbehälters mit einem rohen temporären Implantat (1), vorzugsweise mit einer rohen Mikro-Osteosyntheseschraube,
- Evakuieren des Druckbehälters für eine Zeitdauer von ca. 5 Minuten bei einem Druck von ca. 1,2 mbar,
- Spülen des Druckbehälters mit einem Schutzgas,
- erneutes Evakuieren des Druckbehälters für eine Zeitdauer von ca. 5 Minuten bei einem Druck von ca. 1,2 mbar,
- Druckaufbau auf bis ca. 200 bar,
- Aufheizen mit einer Rate von 10 K/min auf eine Temperatur von ca. 1350°C,
- Während des Aufheizens, Erhöhung des Druckes im Druckbehälter auf ca. 1.500 bar,
- Halten dieses Zustandes für eine Zeitdauer von ca. 2 Stunden bei einer Temperatur von 1.350 °C und einem Druck von ca. 1.500 bar, und anschließend
- natürliche Abkühlung auf eine Temperatur von ca. 300 °C,
- Dekomprimieren auf Atmosphärendruck.
- Entnahme des Implantats (1), vorzugsweise der Mikro-Osteosyntheseschraube.
